# EUROPÄISCHE PATENTSCHRIFT

(11) **EP 2 699 510 B1**
(45) Veröffentlichungstag und Bekanntmachung des Hinweises auf die Patenterteilung: **24.01.2018**
(21) Anmeldenummer: 12717184.1
(22) Anmeldetag: 14.04.2012
(51) Int. Cl.: B67C 3/26, B67C 3/28, F16K 23/00, F16K 31/08, F16K 41/10

(54) **FLÜSSIGKEITSVENTIL**
VALVE FOR LIQUIDS
SOUPAPE POUR LIQUIDES

(30) Priorität: 21.04.2011 DE 102011018479
(43) Veröffentlichungstag der Anmeldung: 26.02.2014
(73) Patentinhaber: KHS GmbH, 44143 Dortmund (DE)
(72) Erfinder: FAHLDIECK, Andreas, 55743 Idar-Oberstein (DE)
(86) Internationale Anmeldenummer: PCT/EP2012/001623
(87) Internationale Veröffentlichungsnummer: WO 2012/143108

(56) Entgegenhaltungen:
- DE-B- 1 156 616
- FR-A1- 2 576 079
- FR-A1- 2 785 598
- GB-A- 2 418 970
- US-A1- 2002 017 324

## Beschreibung

Die Erfindung betrifft Flüssigkeitsventile, insbesondere Füllventile für die Getränkeabfüllung entsprechend dem Oberbegriff des Anspruches 1, und wie aus der FR 2 576 079 A1 bekannt. Zweckmäßige Weiterbildungen sind Gegenstand der Unteransprüche.

### Beschreibung des Standes der Technik:

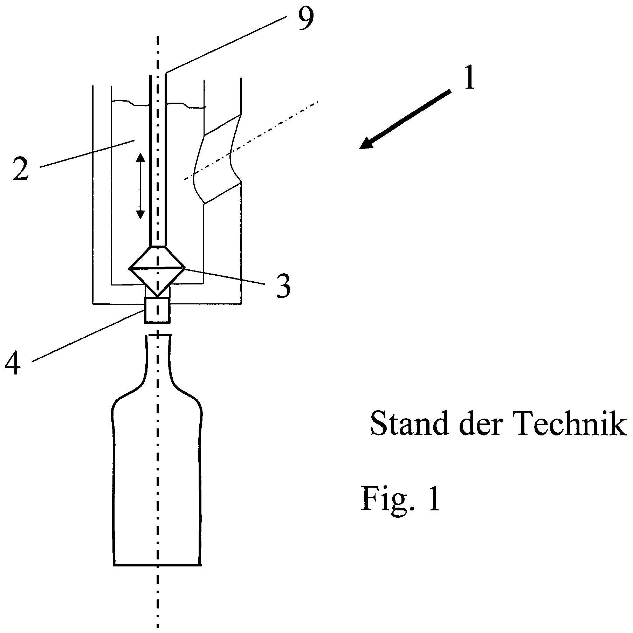

Übliche Flüssigkeitsventile, wie beispielsweise in der Figur 1 dargestellt, beispielsweise zur Abfüllung von Flüssigkeiten in Behälter aller Art, beispielsweise zur Abfüllung von Getränken in Behälter wie Dosen, Flaschen, Kartonverpackungen oder dergleichen, umfassen eine Abgabeöffnung, einen Füllgutzulauf und ein, die Abgabeöffnung freigebendes oder verschließendes Verschlusselement, beispielsweise einen Ventilkegel 3, auf.

Häufig sind solche Füllventile mit einer, das Tropfen solcher Füllventile verhindernden Gassperre 4 ausgestattet.

Bei derartigen Füllventilen 1 ist das Verschlusselement in der Regel an einem auf und ab bewegbaren Betätigungselement, beispielsweise einem Ventilstößel 9 befestigt. Das Öffnen oder Schließen derartiger Ventile erfolgt also durch eine lineare Bewegung eines Verschlusselementes.

Innerhalb des eigentlichen Füllventils 1 ist eine so genannte Ventilkammer 2 angeordnet, welche an ihrem unteren Ende die Abgabeöffnung für das Füllgut aufweist. Innerhalb der Ventilkammer sind sowohl der Ventilstößel 9 als auch das Verschlusselement angeordnet. Weiterhin ist von Bedeutung dass die Ventilkammer 2 in der Regel vollständig mit Füllgut gefüllt ist.

Wird nun zum Schließen des Füllventils das Verschlusselement aus seiner OffenStellung in seine Geschlossen-Stellung bewegt, so wird ebenfalls der Ventilstößel abwärts bewegt, wodurch die Länge des innerhalb der Ventilkammer befindlichen Ventilstößels vergrößert wird, wodurch gleichzeitig das in der Ventilkammer 2 befindliche Volumen des Ventilstößels vergrößert wird. Durch das Öffnen oder Schließen eines solchen Füllventils werden also die Verhältnisse der innerhalb der Ventilkammer 2 befindlichen Volumina verändert.

Da aber die Ventilkammer vollständig mit Füllgut gefüllt ist, wird durch die Volumenzunahme des in der Ventilkammer befindlichen Ventilstößels ein gewisses Flüssigkeitsvolumen verdrängt, wobei das Verdrängen des Flüssigkeitsvolumens in der Regel dazu führt, dass die Gassperre das Füllgut nicht mehr vollständig hält, wodurch unerwünschtes Tropfen entsteht.

Ebenfalls führt die oben beschriebene Volumenänderung innerhalb des Füllventils zu einem Druckstoß, welcher die Problematik des Tropfens noch verschärft.

Ebenfalls tritt dieses unerwünschte Versagen der Gassperre beim Schließen von Füllventilen auf, bei denen der Ventilstößel in flexiblen Abdichtungselementen, beispielsweise Faltenbälgen oder Membranen aufgenommen ist, welche der Bewegung des Ventilstößels zumindest für eine bestimmte Wegstrecke folgen.

Die beim Schließen eines Ventils bedingt durch Volumenänderungen in der Ventilkammer auftretenden Problematik der Druckstöße betrifft auch solche Ventile, die dazu dienen eine Rohrleitung für Flüssigkeiten abzusperren.

Der Vollständigkeit halber sei an dieser Stelle erwähnt, dass in der Technik auch solche Flüssigkeitsventile bekannt sind, bei denen das Verschlusselement, beispielsweise die durchbohrte Kugel eines Kugelventils, zum Öffnen oder Schließen des Ventils eine Rotationsbewegung ausführt. Somit erlauben auch derartige Ventile ein Öffnen und Schließen des Ventils ohne Änderung der in der Ventilkammer befindlichen Volumina. Da aber bei derartigen Ventilen die erforderlichen Dichtflächen nicht offen liegen, und somit nicht in ausreichendem Maße gereinigt werden können, sind derartige Ventile somit nicht universell, beispielsweise auch in der Getränkeindustrie einsetzbar. Schlussendlich liefern derartige Flüssigkeitsventile keinen Beitrag zur Beurteilung der vorliegenden Erfindung und werden somit hier nicht weiter berücksichtigt.

### Aufgabe der Erfindung:

Aufgabe der Erfindung ist es, ein Flüssigkeitsventil, insbesondere ein Füllventil für Getränke, zu entwickeln, bei welchem beim Schließen und/oder Öffnen des Ventils das Auftreten von Volumenveränderungen in der Ventilkammer und/oder das Auftreten von Druckstößen zumindest erheblich vermindert, vorzugsweise aber vollständig unterbunden wird.

### Lösung:

Es wird ein Flüssigkeitsventil gemäß dem Anspruch 1 vorgeschlagen. Im nachfolgenden wird die Erfindung anhand von Ausführungsbeispielen erläutert. Im Einzelnen zeigen die
- Fig. 1: ein dem Stand der Technik entsprechenden Flüssigkeitsventil, die
- Fig. 2: ein erstes Ausführungsbeispiel eines erfindungsgemäßen Flüssigkeitsventils, die
- Fig. 3: in zweites Ausführungsbeispiel eines Flüssigkeitsventils, das kein Teil der Erfindung ist, und die
- Fig. 4: ein erfindungsgemäß weitergebildetes Flüssigkeitsventil zum Öffnen oder Schließen einer Durchgangsöffnung.

"Behälter" im Sinne der Erfindung sind insbesondere Dosen, Flaschen, Tuben, Pouches, jeweils aus Metall, Glas und/oder Kunststoff, aber auch andere Packmittel, die zum Abfüllen von flüssigen oder viskosen Produkten für ein Druckfüllen oder für ein druckloses Füllen geeignet sind.

Der Ausdruck "im Wesentlichen" bzw. "etwa" bedeutet im Sinne der Erfindung Abweichungen von jeweils exakten Werten um +/- 10%, bevorzugt um +/- 5% und/oder Abweichungen in Form von für die Funktion unbedeutenden Änderungen.

Der grundlegende Gedanke der Erfindung besteht darin, dass das, bei bekannten Ventilen die Volumenänderungen und Druckstöße verursachende Betätigungselement des Verschlusselementes nicht mehr direkt in der Ventilkammer 2, also in direktem Kontakt mit der Flüssigkeit angeordnet wird. Vielmehr ist vorgesehen, dass das Betätigungselement des Verschlusselementes innerhalb eines in der Ventilkammer 2 angeordneten Hohlkörpers mit konstanten Volumen angeordnet wird, wobei die Bewegung des Betätigungselementes so auf das Verschlusselement bzw. den eigentlichen Ventilkegel übertragen wird, dass es dabei nicht zu Veränderungen der innerhalb der Ventilkammer 2 befindlichen Volumina kommt.

Für ein erstes Ausführungsbeispiel ist vorgesehen, dass das konstante Volumen aus mindestens einem flexiblen, elastisch verformbaren Element gebildet wird. Dabei ist weiterhin vorgesehen, dass sich durch die elastische Verformung des mindestens einen flexiblen Elementes keine Änderung des, von dem mindestens einen Element eingenommenen Volumens ergibt.

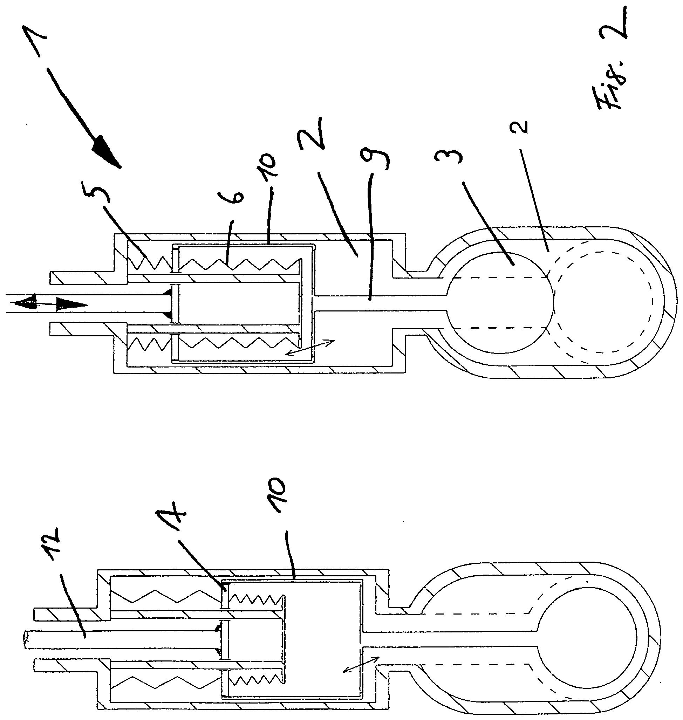

Beispielsweise wird, wie in der Figur 2 dargestellt, das konstante Volumen aus zwei Faltenbälgen 5, 6 bebildet. Dabei ist bei dem dargestellten Ausführungsbeispiel der erste Faltenbalg 5 mit seinem oberen Ende an der Oberseite der Ventilkammer 2 befestigt. Das untere Ende dieses Faltenbalges 5 ist mit einer höhenverstellbaren Dichtscheibe 7 verbunden. Der zweite Faltenbalg 6 ist mit der Unterseite der Dichtscheibe 7 und der Oberseite einer Bodenscheibe 8, welche den unteren Abschluss des konstanten Volumens bildet, verbunden.

Durch die Art ihrer Befestigung können die Faltenbälge 5,6 den Bewegungen der Dichtscheibe folgen. Dabei sind die Faltenbälge 5, 6 derart aufgebildet und ausgewählt, dass das von ihnen eingeschlossene Volumen, bzw. das von ihnen gebildete Volumen unabhängig von der augenblicklichen höhenmäßigen Position der Dichtscheibe 7 konstant ist.

An den äußeren Umfang der höhenbeweglichen Dichtscheibe 7 schließt eine klammer- oder stegartige Befestigungsvorrichtung 10 an, mit welcher schließlich über den Ventilstößel 9 das eigentliche Verschließelement, beispielsweise ein Ventilkegel 3 mechanisch verbunden ist.

Innerhalb des konstanten Volumens ist ein Aktor 12 zur Steuerung der Bewegung der Dichtscheibe 7 angeordnet. Dieser Aktor 12 ist fest mit der Dichtscheibe 7 verbunden, so dass diese stets den Bewegungen des Aktors 12 folgt.

Bedingt durch diese erfindungsgemäß vorgeschlagene Lösung wird es erstmals ermöglicht, das Öffnen und/oder Schließen des Ventils ohne störende Volumenveränderungen innerhalb der Ventilkammer 2 und somit auch ohne Pumpeffekt durchzuführen.

Es versteht sich von selbst, dass das konstante Volumen auch aus anderen elastisch verformbaren Elementen gebildet werden kann, beispielsweise aus Rollmembranen oder ähnlichem.

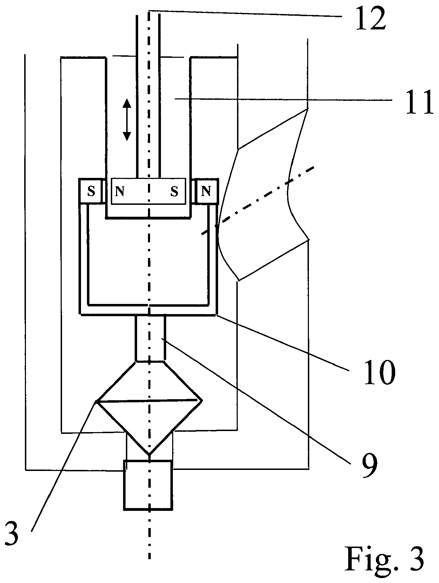

Ein weiteres Ausführungsbeispiel, das kein Teil der vorliegenden Erfindung ist, ist in der Figur 3 dargestellt.

Im Gegensatz zum ersten Ausführungsbeispiel ist bei diesem Ausführungsbeispiel vorgesehen, dass das konstante Volumen nicht durch mindestens ein elastisch verformbares Element zu bilden.

Vielmehr wird bei diesem Ausführungsbeispiel vorgeschlagen, dass konstante Volumen aus einem starren Hohlkörper 11 zu bilden.

Innerhalb dieses Hohlkörpers 11 ist ein Aktor 12 abgeordnet, welcher beispielsweise durch eine Auf- und Abwärtsbewegung das Öffnen und Schließen des Ventils steuert.

Am unteren Ende des Aktors 12 sind Magnete angeordnet, wie dieses in der Figur 3 durch die symbolhafte Darstellung eines Nord- und eines Südpols angedeutet ist.

Außerhalb des Hohlkörpers 11 sind ebenfalls Magnete angeordnet, wobei diese beispielsweise in einer Führung reibungsarm beweglich gelagert sind.

Insgesamt sind Ausbildung und Anordnung der Magnete im Hohlkörper 11, der Magnete außerhalb des Hohlkörpers 11 und auch innerhalb des Hohlkörpers 11 derart, dass zwischen den inneren und äußeren Magneten eine störungsfreie magnetische Kopplung möglich ist, so dass die äußeren Magnete den Bewegungen der inneren Magnete stets ohne Verzögerung und ohne unzulässige längenmäßige Abweichungen folgen können.

An die in der Figur 3 nur schematisch dargestellte Aufnahme der äußeren Magnete schließt ebenfalls eine Befestigungsvorrichtung 10 an, welche wiederum über den Ventilstößel 9 mit dem eigentlichen Verschließelement, beispielsweise einem Ventilkegel 3 mechanisch verbunden ist.

Auch bei diesem Ausführungsbeispiel ist somit ein Öffnen und Schließen des Füllventils möglich, ohne dass es dabei zu einer Änderung der in der Ventilkammer 2 angeordneten Volumina kommt.

Für alle Ausführungsformen gilt, dass die klammer- oder stegartige Befestigungsvorrichtung 10 so ausgeführt ist, dass diese bei ihrer Auf- oder Abwärtsbewegung einen möglichst geringen Strömungswiderstand aufweist.
Dem entsprechend besteht die Befestigungsvorrichtung 10 vorzugsweise aus wenigen stabförmigen Elementen, wobei insbesondere die quer zur Bewegungsrichtung angeordneten Elemente strömungsgünstig, beispielsweise stromlinienförmig ausgebildet sind.

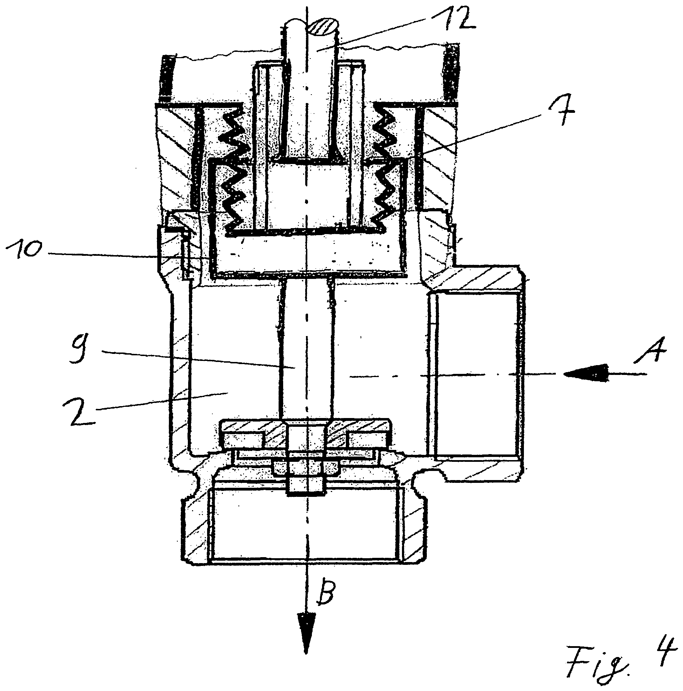

Neben den oben beschriebenen Ventilen für die Abfüllung von Flüssigkeiten aller Art, bei denen eine Abgabeöffnung geöffnet oder verschlossen wird, eignet sich die vorliegende Erfindung auch in außergewöhnlicher Weise für die Anwendung bei Ventilen, die dazu dienen eine Durchleitungsöffnung zu öffnen oder zu verschließen. Beispielhaft für alle derartigen Ventile wird in der Figur 4 ein erfindungsgemäß weitergebildetes Eckventil dargestellt.

Auch bei diesem Ausführungsbeispiel ist innerhalb der Ventilkammer 2 ein konstantes Volumen angeordnet, wobei dieses konstante Volumen den Aktor 12 und die Dichtscheibe 7 aufnimmt. Durch eine Befestigungsvorrichtung 10 ist die Dichtscheibe 7 mit dem Ventilstößel 9 verbunden, welcher somit die Bewegungen des Aktors 12 auf das Verschlusselement des Ventils überträgt. Das, das Eckventil durchströmende Medium tritt in Richtung A in das Eckventil ein, und tritt in Richtung B wieder aus diesem aus. Durch die erfindungsgemäße Weiterbildung werden auch bei derartigen Ventilen unerwünschte, durch den mechanischen Aufbau des Ventils erzeugte Druckstöße sicher vermieden.

Ein weiteres Beispiel eines Flüssigkeitsventils zum Öffnen oder Schließen einer Durchgangsöffnung zeigt die Figur 2 in Form eines so genannten Schiebers. Durch die gezeigte, erfindungsgemäße Ausbildung eines solchen Schiebers können derartige Vorrichtungen in einer hygienischen, d.h. gut zu reinigenden Bauweise erstellt werden. Bislang wurden bei derartigen Flüssigkeitsventilen durch die bei diesen verwendeten Stopfbuchsen und die lineare Bewegung des Verschlusselementes bei jeder Betätigung Schmutzpartikel und auch Abrieb der Stopfbuchsen in die Ventilkammer eingetragen. Ebenfalls konnten die innerhalb der Stopfbuchse befindlichen Anteile des Aktors 12 nicht gereinigt werden.

Die Erfindung wurde vorstehend an Ausführungsbeispielen beschrieben. Es versteht sich, dass zahlreiche Änderungen sowie Abwandlungen möglich sind. Die vorgeschlagene magnetische Kopplung zwischen Aktor 12 und Befestigungsvorrichtung 10 wurde lediglich für die Ausbildung des konstanten Volumens als starren Hohlkörper dargestellt, es versteht sich jedoch von selbst, dass die magnetische Kopplung auch für den Fall der Bildung des konstanten Volumens aus mindestens einem elastisch verformbaren Element vorgenommen werden kann.

### Bezugszeichen

- 1: Füllventil
- 2: Ventilkammer
- 3: Ventilkegel
- 4: Gassperre
- 5: Faltenbalg, oben
- 6: Faltenbalg, unten
- 7: Dichtscheibe
- 8: Bodenscheibe
- 9: Ventilstößel
- 10: Befestigungsvorrichtung
- 11: Hohlkörper
- 12: Aktor

## Patentansprüche

1. Flüssigkeitsventil, insbesondere Füllventil für die Abgabe eines Füllgutes, für das Öffnen und Schließen einer Abgabe- oder Durchflussöffnung, mit einer linearen Bewegung des Verschlusselementes (3), mit einer Ventilkammer in welcher das Verschlusselement (3) angeordnet ist, wobei der, die Bewegung des Verschlusselementes (3) bewirkende Aktor (12) innerhalb eines von zwei hintereinander angeordneten elastisch verformbaren Elementen (5,6), wie z.B. Faltenbälgen oder Rollmembranen, gebildeten Hohlkörpers angeordnet ist, wobei der Aktor (12) fest mit einer höhenverstellbaren Dichtscheibe (7) verbunden ist, und an den äußeren Umfang der Dichtscheibe (7) eine klammer- oder stegartige Befestigungsvorrichtung (10) anschließt, mit welcher über einen Ventilstößel (9) das Verschlusselement (3) mechanisch verbunden ist, wobei das erste elastisch verformbare Element (5) mit seinem oberen Ende an der Oberseite der Ventilkammer (2) befestigt ist, und das untere Ende mit der Dichtscheibe (7) verbunden ist,
wobei das zweite elastisch verformbare Element (6) mit der Unterseite der Dichtscheibe (7) und der Oberseite einer Bodenscheibe (8), welche den unteren Abschluss des konstanten Volumens bildet, verbunden ist,
wobei der Aktor (12) die Steuerung der Bewegung der Dichtscheibe (7) bewirkt und fest mit der Dichtscheibe (7) verbunden ist, so dass diese stets den Bewegungen des Aktors (12) folgt,
wobei das von den elastisch verformbaren Elementen (5,6) eingeschlossenen Volumen, bzw. das von ihnen gebildete Volumen, unabhängig von der augenblicklichen höhenmäßigen Position der Dichtscheibe (7) konstant ist, wobei das von den elastisch verformbaren Elementen (5,6) gebildete Volumen innerhalb der Ventilkammer (2) angeordnet ist, **dadurch gekennzeichnet,**
**dass** sich das Füllgut ausschließlich außerhalb des Hohlkörpers befindet.

## Claims

1. Valve for liquids, in particular a filling valve for distributing a filling product, for opening and closing a distribution or flow opening, with a linear movement of the closure element (3), with a valve chamber in which the closure element (3) is arranged, wherein the actuator (12) which influences the movement of the closure element (3) is arranged within a hollow body formed from two elastically deformable elements (5, 6) arranged one behind the other, such as, for example, folding bellows or roll membranes, wherein the actuator (12) is securely connected to a height-adjustable sealing disk (7), and connected to the outer circumference of the sealing disk (7) is a securing device (10) in the form of a clamp or web, with which, by means of a valve tappet (9), the closure element (3) is mechanically connected,
wherein the first elastically deformable element (5) is secured by its upper end to the upper side of the valve chamber (2), and the lower end is connected to the sealing disk (7),
wherein the second elastically deformable element (6) is connected to the under side of the sealing disk (7) and to the upper side of a floor disk (8), which forms the lower connection of the constant volume, wherein the actuator (12) has the effect of controlling the movement of the sealing disk (7) and is securely connected to the sealing disk (7), such that this always follows the movements of the actuator (12), wherein the volume enclosed by the elastically deformable elements (5, 6), or, respectively, the volume formed by them, is constant, regardless of the position of the sealing disk (7) in respect of its height at any particular time,
wherein the volume formed by the elastically deformable elements (5, 6) is arranged inside the valve chamber (2),
**characterised in that**
the filling material is located exclusively outside the hollow body.

## Revendications

1. Soupape pour liquides, en particulier soupape de remplissage pour la distribution d'un produit de remplissage, pour l'ouverture et la fermeture d'une ouverture de distribution ou de passage, avec un déplacement linéaire de l'élément de fermeture (3), avec une chambre de soupape dans laquelle l'élément de fermeture (3) est agencé, dans laquelle, l'actionneur (12) provoquant le déplacement de l'élément de fermeture (3) est agencé à l'intérieur d'un corps creux formé de deux éléments élastiquement déformables (5, 6) agencés l'un derrière l'autre, comme par exemple des soufflets ou des membranes déroulantes,
dans laquelle l'actionneur (12) est relié solidement à un disque d'étanchéité réglable en hauteur (7), et un dispositif de fixation de type pince ou entretoise (10) se raccorde à la périphérie extérieure du disque d'étanchéité (7), auquel l'élément de fermeture (3) est relié mécaniquement par le biais d'un poussoir (9),
dans laquelle le premier élément élastiquement déformable (5) est fixé avec son extrémité supérieure à la face supérieure de la chambre de soupape (2), et l'extrémité inférieure est reliée au disque d'étanchéité (7),
dans laquelle le deuxième élément élastiquement déformable (6) est relié à la face inférieure du disque d'étanchéité (7) et à la face supérieure d'un disque de fond (8), qui forme la fermeture inférieure du volume constant,
dans laquelle l'actionneur (12) provoque la commande du déplacement du disque d'étanchéité (7) et est relié solidement au disque d'étanchéité (7), si bien que celui-ci suit toujours les déplacements de l'actionneur (12),
dans laquelle le volume renfermé par les éléments élastiquement déformables (5, 6), respectivement le volume formé par ceux-ci, est constant indépendamment de la position en hauteur instantanée du disque d'étanchéité (7), dans laquelle le volume formé par les éléments élastiquement déformables (5, 6) est agencé à l'intérieur de la chambre de soupape (2),
**caractérisée en ce**
**que** le produit de remplissage se trouve exclusivement en dehors du corps creux.
